(19) Europäisches Patentamt
European Patent Office
Office européen des brevets

(11) Veröffentlichungsnummer: **0 453 492 B1**

# (12) EUROPÄISCHE PATENTSCHRIFT

(45) Veröffentlichungstag der Patentschrift: **25.05.94**

(51) Int. Cl.5: **C09D 179/00**, C08G 73/02, C08G 73/04

(21) Anmeldenummer: **90902217.0**

(22) Anmeldetag: **05.01.90**

(86) Internationale Anmeldenummer:
**PCT/EP90/00019**

(87) Internationale Veröffentlichungsnummer:
**WO 90/08175 (26.07.90 90/17)**

## (54) LACKBINDEMITTEL.

(30) Priorität: **13.01.89 DE 3900859**

(43) Veröffentlichungstag der Anmeldung:
**30.10.91 Patentblatt 91/44**

(45) Bekanntmachung des Hinweises auf die Patenterteilung:
**25.05.94 Patentblatt 94/21**

(84) Benannte Vertragsstaaten:
**AT BE CH DE ES FR GB IT LI NL SE**

(56) Entgegenhaltungen:

**Keine Entgegenhaltungen**

(73) Patentinhaber: **Henkel Kommanditgesellschaft auf Aktien**

**D-40191 Düsseldorf(DE)**

(72) Erfinder: **HASE, Brigitte**
**Gerhart-Hauptmann-Stra e 34**
**D-4006 Erkrath 1(DE)**
Erfinder: **EICKEN, Ulrich**
**Vohwinkelallee 17**
**D-4000 Düsseldorf(DE)**
Erfinder: **FISCHER, Herbert**
**Am Nettchesfeld 14**
**D-4000 Düsseldorf(DE)**
Erfinder: **KRAUSE, Horst-Jürgen**
**Am Nettchesfeld 22**
**D-4000 Düsseldorf(DE)**
Erfinder: **GRESS, Wolfgang**
**Westfalenweg 247**
**D-5600 Wuppertal(DE)**
Erfinder: **STORK, Norbert**
**Bahlenstra e 99**
**D-4000 Düsseldorf(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 453 492 B1

## Beschreibung

Die vorliegende Erfindung liegt auf dem Gebiet der Lacke und Anstrichmittel und betrifft neue oxidativ härtende Bindemittel und deren Verwendung.

Bei Lacken oder Anstrichmitteln unterscheidet man prinzipiell zwischen physikalisch trocknenden und chemisch trocknenden Systemen. Im ersten Falle bildet sich der Lackfilm aus den im Lösungsmittel gelösten oder dispergierten Bindemitteln (Filmbildner, Harze, Weichmacher) durch Verdunsten des Lösungsmittels ohne weitere chemische Reaktion. Im zweiten Falle findet nach dem Auftrag des Lacks auf die Oberfläche eine chemische Reaktion statt, die zur Vernetzung im Lackfilm führt, mit der Folge, daß die Wiederauflösbarkeit des getrockneten (gehärteten) Films gegenüber den ursprünglichen Lackbestandteilen drastisch vermindert ist.

Eine Form der chemisch trocknenden Anstrichmittel sind die oxidativ trocknenden Systeme, bei denen die Vernetzungsreaktion durch Luftsauerstoff ausgelöst wird. Zu den oxidativ trocknenden Systemen gehören die alten Öllacke und Ölfarben, die als oxidativ vernetzende Bindemittel hoch ungesättigte Öle, wie Leinöl und Sojaöl (sogenannte trocknende Öle) zusammen mit Sikkativen (Trocknungshilfsmitteln) enthielten. Ihre Trocknungszeit ist jedoch für heutige Ansprüche zu lang. Die heute wichtigsten oxidativ härtenden Anstrichmittel basieren auf Alkydharzen, in die hoch ungesättigte Fettsauren in Form gemischter Polyester einkondensiert sind. Um eine ausreichende Qualität des Lackfilms sicherzustellen, ist es dabei notwendig, die Kennzahlen der Alkydvorkondensate, die in die Lacke eingearbeitet werden, sehr konstant zu halten. Dies erfordert bei einer Kondensationsreaktion naturgemäß außerordentlich hohen Aufwand hinsichtlich der Reaktionsführung. Durch die Anwesenheit der Esterbindung bleibt zudem bei den Alkydharzen eine gewisse Hydrolyseanfälligkeit bestehen.

In diesem Zusammenhang bestand die Aufgabe, weitere Alternativen aufzuzeigen und besser geeignete Systeme zu entwickeln.

Es wurde gefunden, daß diese Aufgabe gelöst werden kann, wenn den Anstrichmitteln bestimmte Poly-N-acylalkylenimine zugesetzt werden.

Gegenstand der Erfindung ist daher die Verwendung von Poly-N-acylalkyleniminen der Formel

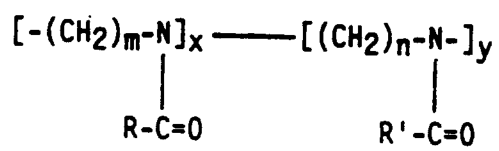

(I)

als oxidativ vernetzenden Bestandteil in Anstrichmitteln. In der Formel bedeuten R-CO den Acylrest einer einfach oder mehrfach ungesättigten aliphatischen Carbonsäure mit 16 bis 22 C-Atomen oder eine Mischung solcher Reste, R'-CO den Acylrest einer Carbonsäure mit 1 bis 22 C-Atomen oder eine Mischung solcher Reste und x und y die Gewichtsanteile der jeweiligen Polymerbausteine, wobei x Werte von 20 bis 100 %, vorzugsweise 20 bis 95 %, und y Werte von 80 bis 0 %, vorzugsweise 80 bis 5 % annehmen kann. Die Indices m und n können unabhängig voneinander den Wert 2 oder 3 aufweisen.

Die erfindungsgemäß in Anstrichmitteln verwendeten Poly-N-acylalkylenimine können leicht und ohne besondere Vorkehrungen in beliebiger Zusammensetzung reproduzierbar hergestellt werden. Die Verbindungen sind praktisch nicht hydrolyseanfällig und liefern schnell trocknende Fitme mit gutem Glanz und hoher Härte. Die Zusammensetzung der Poly-N-acylalkylenimine und damit ihre Eigenschaften können in weiten Grenzen den Anforderungen der verschiedenen Anstrichmittel angepaßt werden, so daß sich mit diesen Polymeren sowohl Lacke und Farben auf Basis organischer Lösungsmittel als auch wasserbasierende Anstrichmittel herstellen lassen.

Vorzugsweise werden die erfindungsgemäßen Poly-N-acylakylenimine in den Anstrichmitteln als alleiniges Bindemittel oder als überwiegender Anteil der insgesamt enthaltenen Bindemittel verwendet. Es ist aber auch möglich und kann je nach Anforderungen an den Lack auch vorteilhaft sein, die Poly-N-acylalkylenimine zusammen mit größeren Anteilen anderer bekannter Bindemittel, beispielsweise Alkydharzen, Nitrocellulose oder Chlorkautschuk in Mischungsverhältnissen von etwa 10 : 1 bis etwa 1 : 10 zu verwenden. Selbstverständlich können die Anstrichmittel außer den bereits erwähnten Bestandteilen alle anderen Hilfs- und Zusatzstoffe, die in Lacken und Farben üblich sind, enthalten. Beispielhaft seien hier nur Pigmente, Farbstoffe, Füllstoffe, Sikkative, Reaktivverdünner, Hautverhinderungsmittel und Verlaufmittel genannt. Auch Weichmacher und Harze, die gelegentlich zu den Bindemitteln gezählt werden, gehören hierzu. Bei der Abmischung mit anderen Bestandteilen wirkt sich die gute Verträglichkeit der erfindungsgemäßen Poly-N-acylalkylenimine vorteilhaft aus.

Poly-N-acylalkylenimine der Formel I lassen sich prinzipiell durch Acylierung von Polyalkyleniminen mit Carbonsäuren oder Carbonsäurederivaten darstellen. Üblicher ist jedoch die Herstellung durch kationische Polymerisation von $\Delta^2$-5,6-Dihydro-4H-1,3-oxazinen und/oder von $\Delta^2$-Oxazolinen (4,5-Dihydro-1,3-oxazolen), die in 2-Stellung die Reste R oder R' tragen. Da es sich bei diesen Monomeren um cyclische Iminoether handelt, werden die daraus hergestellten Polymeren auch als Polyiminoether bezeichnet. Für die ausschließlich aus $\Delta^2$-Oxazolinen, beispielsweise nach den in DE 12 06 585, DE 15 70 213 oder DE 19 04 540 angegebenen Verfahren hergestellten Polymeren, ist auch die Bezeichnung Polyoxazoline gebräuchlich; entsprechend für die aus $\Delta^2$-Dihydrooxazinen hergestellten Polymeren die Bezeichnung Polyoxazine. Die 2-substituierten Oxazoline sind ihrerseits beispielsweise aus den β-Chlorethylamiden oder aus den Ethanolamiden der entsprechenden Carbonsäuren oder Carbonsäuregemische durch Dehydrohalogenierung oder Dehydratisierung zugänglich. In gleicher Weise können die Dihydrooxazine aus den Propanolamiden der Carbonsäuren oder entsprechenden Derivaten erhalten werden. Bezüglich der Einzelheiten wird auf die Literatur verwiesen (siehe beispielsweise A. Levy und M. Litt, J. polym. Sci. A1, 6, 1883 (1968); S. Kobayashi und T. Saegusa in Ring-Opening Polymerisation Vol. 2, Ed. J. Irvin, T. Saegusa, London 1984, S. 761 sowie EP 88 118 090.5 und DE-P 39 14 155).Das Molekulargewicht der Polymeren läßt sich in erster Linie durch die Wahl der Menge an Polymerisationskatalysator (Brönstedt- und Lewis-Säuren, Alkylierungsmittel u. a.) in weiten Grenzen variieren. Dabei können niedrige Molekulargewichte auch bei geringer Katalysatorkonzentration erhalten werden, wenn daneben Substanzen, die zu Kettenübertragungen führen, beispielsweise Alkohole oder Carbonsäuren, zugesetzt werden. Für die erfindungsgemäße Anwendung eignen sich vor allem Polymere mit mittleren Molekulargewichten (Gewichtsmittel) zwischen 1000 und 1 000 000, insbesondere 3000 bis 50 000.

Die gezielte Herstellung von Copolymerisaten aus zwei oder mehr individuellen 2-substituierten cyclischen Iminoethern ist ebenfalls unproblematisch. Da sich die Polymerisation in jedem Falle praktisch bis zum vollständigen Umsatz der Monomeren führen läßt, kann die Zusammensetzung der Copolymeren ohne weiteres durch die Wahl der Monomeranteile bestimmt werden. Geht man bei der Polymerisation von Monomergemischen aus, so werden Copolymerisate mit statistischer Verteilung der einzelnen Bausteine erhalten. Dabei kann das Monosergemisch aus einzeln synthetisierten cyclischen Iminoethern zusammengesetzt werden oder aber, je nach Syntheseverfahren, auch in eines Schritt aus einem entsprechenden Gemisch von Carbonsäuren oder Carbonsäurederivaten gewonnen werden. Dieser zweite Weg wird vor allem dann bevorzugt, wenn die Carbonsäuren oder ihre Derivate aus natürlichen Fetten oder Ölen hergestellt werden. Dosiert man bei der Polymerisation die einzelnen cyclischen Iminoethern nacheinander, so läßt sich die Abfolge der Monomerbausteine im Polymeren bis hin zu Blockcopolymerisaten beeinflussen. Bevorzugt werden die Polymeren aus Oxazolinen hergestellt, d. h. in Formel I haben m und n vorzugsweise den Wert 2.

Die Mehrzahl der erfindungsgemäß verwendbaren Poly-N-acylalkylenimine sind bisher nicht beschrieben worden. Sie sind daher ein eigener Gegenstand der Erfindung.

Bevorzugt werden im Rahmen der Erfindung die Poly-N-acylalkylenimine, in denen R-CO der Acylrest einer natürlichen ungesättigten Fettsäure mit 16 bis 22 C-Atomen und/oder einer Carbonsäure ist, die durch Modifizierung einer mehrfach ungesättigten Fettsäure dieses Typs hergestellt wurde. Als Modifizierungsreaktionen, die gegebenenfalls auch am fertigen Iminoether vorgenommen werden können, werden hier insbesondere die alkalikatalysierte Verlagerung einer der Doppelbindungen in der Linolsäure aus der 9,12-Stellung in die 9,11- oder 10,12-Stellung (unter partieller cis-trans-Isomerisierung zur sogenannten Konjuenfettsäure), die alkalikatalysierte cis-trans-Isomerisierung einzelner Doppelbindungen und die partielle Epoxidierung der Linol- oder Linolensäure, gegebenenfalls mit anschließender Öffnung des Epoxidrings unter Addition von Wasser oder niederen Alkoholen mit 1 bis 3 C-Atomen (z. B. Methanol, Ethanol, Ethylenglykol) angesehen. Als Beispiele dieser bevorzugt enthaltenen Acylreste R-CO seien diejenigen genannt, die sich von folgenden Carbonsäuren ableiten (c, t : cis bzw. trans):

Palmitoleinsäure (9c-Hexadecensäure)
Petroselinsäure (6c-Octadecensäure)
Ölsäure (9c-Octadecensäure)
Elaidinsäure (9t-Octadecensäure)
Ricinolsäure (12-Hydroxy-9c-Octadecensäure)
Linolsäure (9c,12c-Octadecadiensäure)
Linolensäure (9c,12c,15c-Octadecatriensäure)
Gadoleinsäure (9c-Eicosensäure)
Arachidonsäure (5,8,11,14-Eicosatetraensäure)
Erucasäure (13c-Docosensäure)

Brassidinsäure (13t-Docosensäure)
Clupanodonsäure (4,8,12,15,19-Docosopentaensäure)
9,11-Octadecadiensäure (cis-trans-Gemisch)
12-Hydroxy-13-methoxy-9c-octadecensäure
12,13-Dihydroxy-9c-octadecensäure

Besonders bevorzugt werden Poly-N-acylalkylenimine, bei denen sich der Rest R-CO von folgenden Carbonsäuren ableitet:

Ölsäure
Ricinolsäure
Linolsäure
Linolensäure
Erucasäure
Additionsprodukte aus monoepoxidierter Linolsäure und Wasser oder Alkoholen mit 1 - 3 C-Atomen

Der Gewichtsanteil x der Polymerbausteine mit dem Rest R-CO beträgt im Polymeren 20 bis 100 %, vorzugsweise 20 - 95 % und insbesondere 50 - 95 %.

Der von R-CO verschiedene Acylrest R'-CO leitet sich von Carbonsäuren mit 1 bis 22 C-Atomen ab, bei denen es sich um gesättigte oder ungesättigte aliphatische oder alicyclische Carbonsäuren, um aromatische oder um araliphatische Carbonsäuren handeln kann, die gegebenenfalls solche Substiuenten tragen können, die, wie Hydroxylgruppen, Ethergruppen, Estergruppen und Halogene, die Polymerisationsreaktion der Iminoether nicht stören. Beispiele für Carbonsäuren, von denen R'-CO abgeleitet sein kann, sind:

Essigsäure
Propionsäure
Capronsäure
10-Undecylensäure
Laurinsäure
Palmitinsäure
Stearinsäure
2-Ethylhexansäure
Cyclohexancarbonsäure
Benzoesäure
t-Butylbenzoesäure
4-Chlorbenzoesäure
Phenylessigsäure
Additionsprodukte aus 9,10-Epoxystearinsäure und Wasser oder Alkoholen mit 1 - 3 C-Atomen, wie beispielsweise

9,10-(Hydroxy, methoxy)-octadecansäure, sowie Ethercarbonsäuren der Formel

$$R^1\text{-O-}(CH_2\text{-}CH_2\text{-O-})_rR^2\text{-}CO_2H$$

mit
$R^1$ = $C_1$-$C_3$-Alkyl
$R^2$ = $C_1$-$C_3$-Alkylen
r = 0 bis 2.

Durch die Wahl von R'CO und den Anteil des betreffenden Bausteins im Polymeren lassen sich die Eigenschaften des Polymeren zusätzlich in weiten Grenzen variieren, ohne daß die trocknenden Eigenschaften dieser Lackbindemittel verloren gehen. So lassen sich beispielsweise durch Einbau kurzkettiger Acylreste R'-CO (abgeleitet beispielsweise von Essigsäure oder Propionsäure) in gewissen Grenzen hydrophile Eigenschaften betonen, während der Einbau langkettiger aliphatischer Acylreste (abgeleitet beispielsweise von Fettsäuren alt 8 bis 22 C-Atomen) zu verstärkter Löslichkeit in Mineralöl führt.

Bevorzugt werden daher Poly-N-acylalkylenimine, bei denen der Acylrest R'-CO von gesättigten aliphatischen Carbonsäuren, von Ethercarbonsäuren mit 2 - 22 C-Atomen oder von Benzoesäure, insbesondere von gesättigten Fettsäuren mit 8 - 22 C-Atomen abgeleitet ist.

Besonders bevorzugt werden als R'-CO die Acylreste, die sich von folgenden Carbonsäuren ableiten:

Stearinsäure
Isostearinsäure
Palmitinsäure
Myristinsäure
Laurinsäure

9,10-(Hydroxy,methoxy)octadecansäure
Behensäure
Benzoesäure

Der Gewichtsanteil y der Polymerbausteine mit dem Rest R'-CO beträgt im Polymeren 80 - 0 %, vorzugsweise 80 - 5 % und insbesondere 50 - 5 %.

Mit Hilfe der erfindungsgemäßen Poly-N-acylalkylenimine lassen sich Lacke hoher Qualität erzeugen, die bei kurzer Trockenzeit Filme von hoher Festigkeit ergeben. Die Filme haften auf verschiedensten Untergründen, so daß auf dieser Basis Anstrichmittel für Metall, Holz, Kunststoff, silikatische Baustoffe und andere Materialien aufgebaut werden können. Diese Anstrichmittel enthalten die Poly-N-acylalkylenimine der Formel I oder die bevorzugten Polymeren dieses Typs im allgemeinen in Mengen von etwa 5 bis etwa 80 Gew.-%, doch können diese Grenzen auch über oder insbesondere unterschritten werden, vor allem, wenn die Mittel neben den Poly-N-acylalkyleniminen noch andere Bindemittel enthalten. Werden die Poly-N-acylalkylenimine zusammen mit anderen Bindemitteln eingesetzt, so kann es zweckmäßig und vorteilhaft sein, die Herstellung der Poly-N-acylalkylenimine in diesen anderen Bindemitteln vorzunehmen. Das heißt, bei der oben beschriebenen Polymerisation der cyclischen Iminoether wirken diese anderen Bindemittel, beispielsweise Alkydharze, Polyurethane oder Polyacrylate, als Lösungsmittel, und man erhält direkt das für die Herstellung der Anstrichmittel benötigte Gemisch der Bindemittel. Vorzugsweise enthalten die Anstrichmittel 10 bis 60 Gew.-% der Poly-N-acylalkylenimine. Dabei können die Poly-N-acylalkylenimine in gelöster oder im Lösungsmittel dispergierter Form neben an sich in Farben und Lacken üblichen Bestandteilen, wie Harzen, Weichmachern, Pigmenten, Sikkativen und anderen Hilfs- und Zusatzstoffen vorliegen. Die Mengen an Lösungsmitteln (Wasser und/oder organische Lösungsmittel) und anderen Bestandteilen liegen in den für Anstrichmittel üblichen Bereichen: Lösungsmittel vorzugsweise 10 bis 90 Gew.-%, insbesondere 20 bis 60 Gew.-%; andere Bindemittel vorzugsweise 0 bis 60 Gew.-%, insbesondere 3 bis 30 Gew.-%; Pigmente vorzugsweise 0 bis 50 Gew.-%, insbesondere 3 bis 40 Gew.-%; andere übliche Hilfs- und Zusatzstoffe vorzugsweise 0 bis 60 Gew.-% und insbesondere 5 bis 30 Gew.-%, jeweils bezogen auf das Gesamtgewicht des Anstrichmittels.

## Beispiele

### A. Herstellung der Poly-N-acylalkylenimine

Als Ausgangsmaterialien dienten in 2-Stellung substituierte Oxazoline und Dihydrooxazine, die überwiegend aus Carbonsäuren oder Carbonsäureathylestern über die Hydroxyethyl- bzw. 3-Hydroxypropylamide durch dehydratisierende Cyclisierung gemäß einer der älteren Anmeldungen EP 88118090.5, DE-P 39 14 133 und DE-P 39 14 155 hergestellt worden waren. Auch wenn dabei von Carbonsäuregemischen oder Methylestern von Carbonsäuregemischen ausgegangen worden war, war auf eine fraktionierte Destillation der Iminoether verzichet worden, so daß die Reste R bzw. R' in den Iminoether in ihrer Zusammensetzung im wesentlichen mit den Zusammensetzungen in den Carbonsäure- oder Methylestergemischen übereinstimmten (Bestimmung durch Kapillar-Gaschromatographie). Im allgemeinen wurden Carbonsäuren oder Methylester in technischer Reinheit eingesetzt; die Zusammensetzung der verwendeten Oxazoline auf Basis von Fettsäuregemischen (bzw. Methylestergemischen) natürlichen Ursprungs ist in Tabelle 1, die Zusammensetzung der Dihydrooxazine in Tabelle 2 aufgeschlüsselt. Einige andere Oxazoline, wie die auf Basis von omega-Acetoxycapronsäure und Bernsteinsäuremonomethylester wurden nach den Verfahren von A. Levy und M. Litt, J. Polym. Sci. A1, 6, 1883-1894 (1968) hergestellt.

Tabelle 1

| Oxazolin hergestellt auf Basis von | Gehalt an Oxazolinen auf Basis von | Gewichts-% |
|---|---|---|
| Sojafettsäure (Edenor[R] Sj, Henkel) | gesättigten Fettsäuren $C_{16}$-$C_{20}$ | 17 |
| | Ölsäure | 26 |
| | Linolsäure | 50 |
| | Linolensäure | 7 |
| Ricinolsäure (Edenor[R] Ri 90, Henkel) | Palmitinsäure | 2 |
| | Stearinsäure | 1 |
| | Ölsäure | 5 |
| | Ricinolsäure | 88 |
| | Linolsäure | 4 |
| Ölsäuremethylester (Edenor[R] ME Ti05, Henkel) | gesättigten Fettsäuren $C_{12}$ - $C_{20}$ | 20 |
| | Ölsäure | 70 |
| | Linolsäure | 9 |
| | Linolensäure | 1 |
| Konjuenfettsäure Edenor[R] UKD 6010, Henkel) | gesättigten Fettsäuren $C_{14}$-$C_{18}$ | 7 |
| | Ölsäure und Elaidinsäure | 26 |
| | Linolsäure | 6 |
| | Gemisch von 9,11-Octadecadiensäure und 10,12-Octadecadiensäure | 61 |
| Sonnenblumenfettsäure (Edenor[R] Sb 05, Henkel) | gesättigten Fettsäuren $C_{16}$-$C_{22}$ | 6 |
| | Ölsäure | 29 |
| | Linolsäure | 64 |
| | Linolensäure | 1 |
| Behensäure (Edenor[R] C 22 R, Henkel) | Palmitinsäure und Stearinsäure | 5 |
| | Arachinsäure | 10 |
| | Behensäure | 81 |
| | Gadoleinsäure | 1 |
| | Erucasäure | 3 |

| Oxazolin hergestellt auf Basis von | Gehalt an Oxazolinen auf Basis von | Gewichts-% |
|---|---|---|
| Erucasäure (Edenor [R] U 122, Henkel) | Palmitinsäure u. Stearinsäure | 1 |
| | Ölsäure | 2 |
| | Gadoleinsäure | 5 |
| | Erucasäure | 92 |
| Elaidinsäure (technisch) | gesättigten Fettsäuren $C_{12}$-$C_{20}$ | 13 |
| | Palmitoleinsäure und 9t-Hexadecensäure | 9 |
| | Ölsäure | 18 |
| | Elaidinsäure | 56 |
| | 9,12-, 9,10- und 10,11-Octadecadiensäure | 4 |
| Kokosvorlauffettsäure | Capronsäure | 2 |
| | Caprylsäure | 61 |
| | Caprinsäure | 34 |
| | Laurinsäure | 3 |
| gehärtete Kokosfettsäure (Edenor[R] HPK 12-18, Henkel) | Caprinsäure | 1 |
| | Laurinsäure | 52 |
| | Myristinsäure | 18 |
| | Palmitinsäure | 10 |
| | Stearinsäure | 19 |
| Fettsäuren aus gehärtetem Rüböl (Edenor[R] HRa, Henkel) | Palmitinsäure | 2 |
| | Stearinsäure | 49 |
| | Arachinsäure | 8 |
| | Behensäure | 41 |
| gehärtete Ricinolsäure (Edenor[R] OSSG, Henkel) | Palmitin- und Stearinsäure | 14 |
| | 12-Hydroxystearinsäure | 86 |
| Hydroxy-methoxy-stearinsäure (aus vollständig epoxidiertem Ölsäuremethylester (90 %ig) mit Methanol) | 9,10-(Hydroxy, methoxy)-octadecansäure | 90 |
| | anderen gesättigten Fettsäuren $C_{16}$ - $C_{18}$ (auch substituiert) | 10 |

| Oxazolin hergestellt auf Basis von | Gehalt an Oxazolinen auf Basis von | Gewichts-% |
|---|---|---|
| Hydroxy-methoxy-behensäure (aus vollständig epoxidiertem Erucasäuremethylester (92 %ig) mit Methanol) | 13,14-(Hydroxy, methoxy)-docosansäure | 92 |
| | anderen gesättigten Fettsäuren $C_{16}$ - $C_{20}$ | 8 |
| Hydroxy-methoxy-octadecensäure (aus partiell epoxidiertem Linolsäuremethylester (61 %ig) mit Methanol) | Gemisch aus 9,10-(Hydroxy, methoxy)-12c-octadecensäure und 12,13-(Hydroxy, methoxy)-9c-octadecensäure | 45 |
| | Linolsäure | 9 |
| | Ölsäure | 15 |
| | gesättigten Fettsäuren $C_{16}$ - $C_{18}$ (auch substituiert) | 31 |

Tabelle 2

| Dihydrooxazin hergestellt auf Basis von | Gehalt an Dihydrooxazin | |
|---|---|---|
| | auf Basis von | Gewichts.-% |
| Sojafettsäure (Edenor [R] Sj, Henkel) | gesättigte Fettsäuren $C_{16}$-$C_{20}$<br>Olsäure<br>Linolsäure<br>Linolensäure | 16<br>26<br>51<br>7 |
| Ricinolsäure (Edenor [R] Ri 90, Henkel) | Palmitinsäure<br>Stearinsäure<br>Ölsäure<br>Ricinolsäure<br>Linolsäure | 2<br>1<br>7<br>87<br>3 |
| Ölsäuremethylester (Ednor [R] ME Ti 05, Henkel) | gesättigte Fettsäuren $C_{12}$-$C_{20}$<br>Ölsäure<br>Linolsäure<br>Linolensäure | 21<br>68<br>10<br>1 |
| Sonnenblumenfettsäure (Ednor [R] Sb 05, Henkel) | gesättigte Fettsäuren $C_{16}$-$C_{22}$<br>Ölsäure<br>Linolsäure<br>Linolensäure | 6<br>30<br>63<br>1 |

Die Polymerisation der Iminoether erfolgte entweder in Lösung oder in Schmelze nach verschiedenen Verfahrensvarianten jeweils bis zum vollständigen Umsatz. Je nach Aufarbeitungsart fielen die Polymeren als weiche, wachsartige bis glasige Feststoffe oder als Pulver an. Die Molekulargewichte der Endprodukte wurden mit Hilfe der Gelpermeationschromatographie gegen Polystyrol als Standard bestimmt und als Gewichtsmittel angegeben.

1. In einem Glaskolben wurden 270 g des Oxazolins auf Basis von Sojafettsäure Edenor$^R$ Sj und 30 g des Oxazolins auf Basis von Ricinolsäure Edenor$^R$Ri 90 zusammen mit 4,8 g Trifluormethansulfonsäuremethylester unter Stickstoff erhitzt und 30 Minuten bei 160 °C gerührt. Das Polymere erstarrte beim Abkühlen auf Raumtemperatur. Sein Molekulargewicht betrug 11500.

2. In einem 1 l Dreihalskolben wurden 100 g Xylol und 10 g des Oxazolins auf Basis von Konjuenfettsäure Edenor$^R$ UKD 6010, 40 g des Oxazolins auf Basis von Ricinolsäure Edenor$^R$ Ri 90 und 50 g des Oxazolins auf Basis von Laurinsäure zusammen mit 0,6 g 2-Undecyl-2-oxazolin-hydroperchlorat als Katalysator für 2 Stunden zum Rückfluß erhitzt. Nach dem Abkühlen wurde das Polymere durch Eingießen der Lösung in überschüssiges Methanol ausgefällt und durch Zentrifugieren isoliert. Die Ausbeute betrug 98 % der Theorie. Molekulargewicht 48300.

3. In einem 1 l Dreihalskolben, der mit Rührer und Rückflußkühler versehen war, wurden 70 g Oxazolin auf Basis von Sojafettsäure Edenor$^R$ Sj und 70 g Toluol zusammen mit 0,9 g Trifluormethansulfonsäuremethylester unter Stickstoff vorgelegt und auf 120 °C erhitzt. Nach 3 Stunden wurde eine 50 %ige Lösung von 30 g Oxazolin auf Basis Propionsäure (2- Ethyloxazolin) zugesetzt und anschließend weitere 3 Stunden bei 120 °C gerührt. Das entstandene Blockcopolymerisat wurde durch Fällen in überschüssiges Methanol isoliert; die Ausbeute betrug 96 % der Theorie. Molekulargewicht 23100.

4. Ein Gemisch der Oxazoline auf Basis Sonnenblumenfettsäure Edenor$^R$ Sb 05 und Isostearinsäure im Verhältnis 85 : 15 wurde mit 0,5 Gew.-% Trifluormethansulfonsäuremethylester versetzt und mit Hilfe einer Schlauchpumpe mit einer Geschwindigkeit von 75 ml/h durch ein geheiztes Rohr aus Edelstahl gepumpt. Das Rohr hatte einen Innendurchmesser von 4 mm und eine Länge von 80 cm, wobei 60 cm in ein Ölbad eintauchten, das auf 160 °C geheizt wurde. Das am Ende des Rohres austretende Polymere erstarrte beim Auftropfen auf ein Aluminiumblech unter Stickstoffatmosphäre. Die Ausbeute war quantitativ. Molekulargewicht 31500.

5. In einem 1 l Dreihalskolben, der mit Rührer und Rückflußkühler versehen war, wurde eine 70 %ige Lösung von 150 g eines Gemisches aus Oxazolin auf Basis Sojafettsäure Edenor$^R$ Sj, Oxazolin auf Basis Behensäure Edenor$^R$ C 22 R und Oxazolin auf Basis Hydroxy-methoxystearinsäure im Gewichtsverhältnis 3 : 4 : 3 in Toluol vorgelegt. Nach Zusatz von 1,2 g Bortrifluoridetherat wurde das Gemisch für 3 Stunden zum Rückfluß erhitzt. Nach dem Abkühlen konnte das Produkt durch Eingießen in überschüssiges Methanol gefällt und durch Zentrifugieren isoliert werden. Die Ausbeute betrug 98 %. Molekulargewicht 18200.

Weitere Poly-N-acylalkylenimine sind in den Tabellen 3 bis 6 aufgeführt, wobei die Zahlenwerte, soweit nicht anders angegeben, die Gewichtsanteile der einpolymerisierten Iminoether darstellen. Im allgemeinen handelt es sich bei den verwendeten Iminoethern um Oxazoline; wenn Dihydrooxazine einpolymerisiert wurden, ist dies bei der Angabe der Carbonsäurebasis durch den Zusatz (Oxazin) gekennzeichnet. Die Polymeren wurden noch folgenden Varianten des Herstellverfahrens gewonnen:

I. Die Monomeren wurden unter Stickstoff gemeinsam mit dem Katalysator in den in der Tabelle angegebenen Gewichtsverhältnissen in einem Kolben unter Rühren 30 Minuten (bei den Beispielen 11 und 12 während 90 Minuten) auf 160 °C erhitzt (siehe auch Beispiel 1).

II. Von der in der Tabelle angegebenen Monomerenmischung wurden 10 % mit der Gesamtmenge des Katalysators unter Stickstoff in einem Kolben unter Rühren auf 120 °C aufgeheizt. Innerhalb von einer Stunde wurden dann die restlichen 90 % des Monomerengemisches, gegebenenfalls nach Erwärmen über den Schmelzpunkt, zugetropft und das Gesamtgemisch eine weitere Stunde bei 120 - 140 °C nachgerührt.

III. Ein Gemisch aus Monomeren und Katalysator, wie in der Tabelle angegeben, wurde mit Hilfe einer Schlauchpumpe durch ein geheiztes Rohr aus Edelstahl gefördert und darin wie in Beispiel 4 angegeben polymerisiert.

IV. Das Oxazolin auf Basis Sojafettsäure wurde mit der Gesamtmenge des in der Tabelle angegebenen Katalysators in einem Kolben unter Stickstoff auf 160 °C aufgeheizt und 30 Minuten (bei Beispiel 25 während 120 Minuten) bei dieser Temperatur gerührt. Bei Beispiel 17 betrug diese Reaktionszeit 120 Minuten bei 120 °C; außerdem wurden in diesem Falle die Oxazoline auf Basis Sojafettsäure und Benzoesäure gemeinsam in dieser Stufe polymerisiert Anschließend wurde das Comonomere zugesetzt und die Reaktionsmischung weitere 30 Minuten (bzw. 120 Minuten) bei Reaktionstemperatur belassen.

V. Ähnlich wie in Beispiel 2 wurde eine 70 %ige Lösung der Monomeren und des Katalysators in Xylol für 3 Stunden zum Rückfluß erhitzt. Das Polymere wurde nach dem Abkühlen durch Einengen der Lösung gewonnen.

Bei der Herstellung wurden folgende Polymerisationskatalysatoren verwendet:

a) Trifluormethansulfonsäuremethylester

b) Bortrifluoridetherat

c) Toluolsulfonsäuremethylester
d) 2-Undecyl-2-oxazolin-hydroperchlorat
e) 2-Pentadecyl-2-oxazolin-hydroperchlorat
f) N-Methyl-2-phenyl-oxazolinium-trifluormethansulfonat
g) N-Methyl-2-heptadecyl-oxazolinium-trifluormethansulfonat

Tabelle 3: Poly-N-acylalkylenimine

| Acylreste RCO bzw. R'CO abgeleitet von | Beispiele 1 | 2 | 3 | 4 | 5 | 6 | 7 | 8 | 9 |
|---|---|---|---|---|---|---|---|---|---|
| Sojafettsäure (Sj) | 90 | | 70 | | 30 | 80 | | | 50 |
| Ricinolsäure (Ri 90) | 10 | 40 | | | | | | | |
| Sonnenblumenfettsäure (Sb 05) | | | | 85 | | | 20 | 50 | 50 |
| Konjuenfettsäure (UKD 6010) | | 10 | | | | | | | |
| Hydroxy-methoxy-octadecensäure | | | | | | 20 | 20 | | |
| Propionsäure | | | 30 | | | | | | |
| Laurinsäure | | 50 | | | | | 60 | | |
| Isostearinsäure | | | | 15 | | | | 20 | |
| gehärtete Ricinolsäure (OSSG) | | | | | | | | 20 | |
| Behensäure (C22 R) | | | | | 40 | | | | |
| Hydroxy-methoxystearinsäure | | | | | 30 | | | | |
| Benzoesäure | | | | | | | | 5 | |
| p-Chlorbenzoesäure | | | | | | | | 5 | |
| Katalysator (Typ) | a | d | a | a | b | c | d | a | c |
| Katalysator/Gew.-% | 1,6 | 0,6 | 0,9 | 0,5 | 0,8 | 3,0 | 3,0 | 0,6 | 0,6 |
| Herstellverfahren | I | V | | III | | I | III | V | I |
| Molekulargewicht/1000 | 11,5 | 48,3 | 23,1 | 31,5 | 18,2 | 6,7 | 11,1 | 29,3 | 28,9 |
| Ausbeute/% d.Th. | 100 | 98 | 96 | 100 | 98 | 100 | 100 | 98 | 100 |

Tabelle 4: Poly-N-acylalkylenimine

| Acylreste RCO bzw. R'CO abgeleitet von | Beispiele 10 | 11 | 12 | 13 | 14 | 15 | 16 | 17 | 18 |
|---|---|---|---|---|---|---|---|---|---|
| Sojafettsäure (Sj) | 35 | | | 60 | | 60 | 70 | 40 | 90 |
| Ricinolsäure(Ri 90) | | | | 30 | | 40 | | | |
| Konjuenfettsäure (UKD 6010) | | 10 | 20 | | 20 | | | | |
| Erucasäure (U 122) | | | 20 | | | | | | |
| Elaidinsäure | 35 | 10 | | | | | | | |
| Essigsäure | | | 60 | | | | | | |
| Propionsäure | | | | | | | | 55 | 10 |
| Kokosfettsäure gehärtet | | | | | 79 | | | | |
| Kokosvorlauffett-säure | | 70 | | | | | | | |
| omega-Hydroxyca-pronsäure | | | | | 1 | | | | |
| gehärtete Ricinol-säure (OSSG) | | 10 | | | | | | | |
| Hydroxy-methoxy-stearinsäure | 30 | | | | | | | | |
| Hydroxy-methoxy-behensäure | | | | | | | 30 | | |
| Benzoesäure | | | | 10 | | | | 5 | |
| **Katalysator (Typ)** | **a** | **b** | **c** | **f** | **b** | **a** | **c** | **a** | **c** |
| **Katalysatormenge/ Gew.-%** | **0,2** | **0,03** | **0,04** | **5,6** | **0,3** | **0,5** | **0,6** | **0,6** | **0,7** |
| **Herstellverfahren** | III | I | I | I | I | I | IV | IV | V |
| **Molekulargewicht/ 1000** | 84 | 510 | 375 | 5,5 | 70,4 | 30,0 | 30,4 | 15,3 | 24,5 |
| Ausbeute/% d. Th. | 100 | 100 | 100 | 100 | 100 | 100 | 100 | 100 | 96 |

Tabelle 5: Poly-N-acylalkylenimine

| Acylreste RCO bzw. R'CO abgeleitet von | Beispiele 19 | 20 | 21 | 22 | 23 | 24 | 25 | 26 | 27 |
|---|---|---|---|---|---|---|---|---|---|
| Sojafettsäure (Sj) | 20 | | | | | 50 | 70 | 100 | 50 |
| Ricinolsäure(Ri 90) | | | | 100 | | | | | |
| Ölsäure (Ti 05) | | 30 | | | | | | | |
| Sonnenblumenfettsäure (Sb 05) | | | | | 100 | 10 | | | |
| Konjuenfettsäure (UKD 6010) | 20 | | 30 | | | | | | |
| Dihydroxyoctadecensäure | | 50 | | | | | | | |
| Caprinsäure | | 20 | 50 | | | | | | |
| Palmitinsäure | 50 | | | | | | 30 | | |
| Stearinsäure | | | 20 | | | | | | 50 |
| Fettsäure aus gehärtetem Rüböl | | | | | | 30 | | | |
| omega-Acetoxycapronsäure | | | | | | 10 | | | |
| Bernsteinsäuremonomethylester | 10 | | | | | | | | |
| Katalysator (Typ) | e | c | g | a | b | c | e | a | a |
| Katalysatormenge/Gew.-% | 2,9 | 2,0 | 0,4 | 0,8 | 0,7 | 4,6 | 0,04 | 0,5 | 0,5 |
| Herstellverfahren | V | II | I | III | III | II | IV | V | I |
| Molekulargewicht/1000 | 14,2 | 10,5 | 112 | 20,5 | 18,5 | 4,9 | 890 | 28,5 | 29,1 |
| Ausbeute/% d. Th. | 97 | 100 | 100 | 100 | 100 | 100 | 100 | 97 | 100 |

Tabelle 6: Poly-N-acylalkylenimine

| Acylreste RCO bzw. R'CO abgeleitet von | Beispiele 28 | 29 | 30 | 31 | 32 | 33 | 34 | 35 | 36 |
|---|---|---|---|---|---|---|---|---|---|
| Sojafettsäure (Sj) | | 85 | 65 | 65 | 70 | 80 | 70 | 70 | 60 |
| Sojafettsäure (Sj) (Oxazin) | 75 | | 25 | | | | | | |
| Ricinolsäure (Ri 90) (Oxazin) | | | | | 10 | | | | |
| Sonnenblumenfett-säure (Sb 05) (Oxazin) | | | | | | | | | 20 |
| Ölsäure (Ti 05) (Oxazin) | | | | | | 20 | | | |
| Laurinsäure (Oxazin) | | | | 35 | | | | | |
| Benzoesäure | 25 | | 10 | | 20 | | | 10 | 20 |
| Benzoesäure (Oxazin) | | | | | | | 30 | | |
| 3,6,9-Trioxa-decansäure | | 15 | | | | | | | |
| 3,6,9-Trioxa-decansäure (Oxazin) | | | | | | | | 20 | |
| Katalysator (Typ) | b | c | a | a | b | c | a | c | c |
| Katalysatormenge/ Gew.-% | 0,6 | 1,4 | 0,6 | 1,2 | 0,6 | 0,6 | 0,7 | 0,8 | 0,7 |
| Herstellverfahren | III | III | I | I | I | II | II | I | II |
| Molekulargewicht/ 1000 | 27 | 20 | 29 | 14 | 26 | 31 | 24 | 25 | 25 |
| Ausbeute/% d. Th. | 100 | 100 | 100 | 100 | 100 | 100 | 100 | 100 | 100 |

B. Verwendung der Poly-N-acylalkylenimine in Lacken und Anstrichmitteln

37. - 48. Lösungsmittelbasierte Klarlacke

In diesen Beispielen wurden Lacke folgender Zusammensetzung durch Vermischen der Komponente bei Raumtemperatur oder unter geringen Erwärmen hergestellt.
65,0 g erfindungsgemäßes Poly-N-acylalkylenimin
0,5 g Cobalt-Sikkativ, 6 Gew.-% Co (Octa-Soligen-Co, Firma Borchers)
2,5 g Zirkon-Sikkativ, 6 Gew.-% Zr (Octa-Soligen-Zr, Firma Borchers)
2,0 g Butanonoxim
30,0 g Kristalloel 30 (Shell)
Die bei Raumtemperatur flüssigen, homogenen Lacke wurden mit Hilfe einer Rakel auf Glasplatten oder Bleche aus rostfreiem Stahl aufgetragen und trockneten dann bei Raumtemperatur an der Luft. Der nach dem Trocknen verbleibende Film hatte eine Schichtdicke von ca. 30 µm und erwies sich in allen Fällen als haftfest und elastisch. In Tabelle 7 sind für Lacke mit verschiedenen Poly-N-acylalkyleniminen die Ergebnisse der Bestimmungen der Pendelhärte nach König (gemäß der deutschen Norm DIN 53 157), der Schlagtiefung (auf Blech, reverse, gemäß US-Norm ASTM-D 2795-69) und des Glanzes (visuell), die nach unterschiedlichen Trockenzeiten (1 - 14 Tage) erhalten wurden, zusammengestellt.

Aus den gemessenen Werten wird deutlich, daß sich mit den erfindungsgemäßen Poly-N-acylalkyleniminen Lacke mit durchweg sehr guten Eigenschaften herstellen lassen.

Tabelle 7

| Bei spiel | Poly-N-acylalkylenimine nach Beispiel | Untergrund | Glanz | Pendelhärte in sec nach | | | Schlagtiefung/inch x pound |
|---|---|---|---|---|---|---|---|
| | | | | 1 d | 7 d | 14 d | |
| 37 | 1 | Glas | hoch | 42 | 50 | 60 | |
| 38 | 3 | Glas | hoch | 28 | 43 | 47 | |
| 39 | 9 | Glas | hoch | 42 | 40 | 45 | |
| 40 | 15 | Glas | hoch | 40 | 46 | 48 | |
| 41 | 18 | Glas | hoch | 53 | 70 | 71 | |
| 42 | 22 | Glas | hoch | 13 | 28 | 32 | |
| 43 | 26 | Glas | hoch | 65 | 71 | 74 | |
| 44 | 27 | Glas | hoch | 34 | 50 | 58 | |
| 45 | 28 | Glas | hoch | 16 | 24 | 32 | |
| 46 | 29 | Glas | hoch | 29 | 31 | 36 | |
| 47 | 30 | Glas | hoch | 19 | 35 | 53 | |
| 48 | 31 | Glas | hoch | 18 | 49 | 53 | |
| 37 | 1 | Blech | hoch | | 55 | | > 80 |
| 40 | 15 | Blech | hoch | | 46 | | > 80 |

49. - 50. Lösungsmittelbasierte Weißlacke

Zur Herstellung dieser Lacke wurden die Poly-N-acylalkylenimine gemäß Beispielen 1 und 15 70 %ig in einem Gemisch aromatischer Kohlenwasserstoffe (Siedebereich 162 - 176 °C, Solvesso $^{R}$ 100) gelöst. In diese Lösung wurden dann das Pigment und einige andere Zusatzstoffe eingetragen, und unter Dispergieren in einem Dissolver bis auf eine Korngröße unter 10 µm daraus Mahlpasten (a) hergestellt, die folgende Zusammensetzung hatten (in Gewichtsteilen):

| | 49a | 50a |
|---|---|---|
| Poly-N-acylalkylenimin nach Beispiel 1 (70 %ige Lösung) | 117,5 | |
| Poly-N-acylalkylenimin nach Beispiel 15 (70 %ige Lösung) | | 108,5 |
| Calciumoctoat (4 %ig) | 4,6 | 4,3 |
| Netzmittel (nichtionisch, 50 %ig) | 4,6 | 4,2 |
| Testbenzin (Siedebereich 145 -200 °C) | 73,2 | 67,8 |
| Titandioxid (Rutil) | 303,1 | 280,2 |
| Diese Mahlpasten wurden dann unter Zusatz einer Mischung (b) der folgenden Komponenten (in Gewichtsteilen) zu streichfähigen Weißlacken verarbeitet: | | |
| | 49b | 50b |
| Poly-N-acylalkylenimin nach Beispiel 1 (70 %ige Lösung) | 459,0 | |
| Poly-Nacylalkylenimin nach Beispiel 15(70 %ige Lösung) | | 424,5 |
| Butanonoxim | 7,1 | 6,6 |
| Bleioctoatlösung (24 % Pb) | 4,2 | 3,9 |
| Zirkonoctoatlösung (6 % Zr) | 4,2 | 3,8 |
| Cobaltoctoatlösung (6 % Co) | 1,8 | 1,7 |
| Solvesso [R] 100 | 10,2 | 47,2 |
| Testbenzin (145 - 200 °C) | 10,5 | 47,3 |
| Weißlack (Summe) | 1000 | 1000 |

Beide Lacke wurden zur Prüfung der Filmeigenschaften mit Hilfe einer Rakel auf Glasplatten aufgetragen oder auf Tiefziehbleche aus Eisen gespritzt und dann bei Raumtemperatur an der Luft getrocknet. Die angewandten Prüfmethoden und die Ergebnisse der Prüfungen sind in Tabelle 8 aufgeführt.

Aus den Meßwerten wird deutlich, daß auch pigmentierte Lacke auf Basis der erfindungsgemäßen Poly-N-acylalkylenimine hervorragende Qualität aufweisen.

Tabelle 8

| | | Beispiel | |
|---|---|---|---|
| | | 49 | 50 |
| Poly-N-acylalkylenimin nach Beispiel | | 1 | 15 |
| Viskosität des Lacks nach 40 Tagen (ICI Cone & Plate-Viskosimeter; mPas) bei 25 °C | | 550 | 560 |
| Auf Glas | | | |
| Pendelhärte (DIN 53 157) in sec. | nach 3 Tagen<br>nach 14 Tagen<br>nach 48 Tagen | 44<br>54<br>84 | 34<br>46<br>80 |
| Glanz (Reflektometerwerte 60 ° nach DIN 53 151) | | 81 | 82 |
| Auf Tiefziehblech | | | |
| Pendelhärte (DIN 53 157) in sec | nach 44 Tagen | 59 | 51 |
| Tiefungsprüfung nach Erichsen (DIN 53 156) in mm | nach 44 Tagen | 8,4 | 8,7 |

51. Wasserbasierter Lack

Unter Rühren wurden in 200 ml Wasser 71,5 g einer 70 %igen Lösung des Poly-N-acylalkylenimins gemäß Beispiel 17 in Isopropanol eingetragen. Anschließend wurden aus dem Gemisch 104,5 g Isopropanol und Wasser unter Vakuum abdestilliert, wobei sich eine stabile Dispersion bildete. Zuletzt wurde diese Dispersion mit 0,18 g Cobalt-Sikkativ (Servosyn [R] WEB, 8 % Co, Firma Servo BV, Delden, NL) und 0,63 g Zirkon-Sikkativ (Servosyn [R] WEB, 12 % Zr, Firma Servo BV, Delden, NL) verrührt.

Zur Prüfung der Filmeigenschaften wurde der Wasserlack mit Hilfe einer Rakel auf tiefgezogene Eisenbleche aufgetragen und dort bei Raumtemperatur an der Luft getrocknet. Staubtrockenheit war nach 2 h erreicht. Nach 14 Tagen betrug die Pendelhärte (DIN 53 157) des hochglänzenden Films (Stärke 50 µm) bereits 78s.

52. Lack auf Basis Poly-N-acylalkylenimin/Alkydharz

Wie in den Beispielen 34 - 45 wurde hier ein lösungsmittelbasierter Klarlack durch Vermischen folgender Komponenten hergestellt:

32,5 g Poly-N-acylalkylenimin gemäß Beispiel 26
43,3 g Alkydharz Alkydal[R] 681 (75 %ig in Testbenzin, Fa. Bayer)
0,5 g Cobalt Sikkativ
2,5 g Zirkon Sikkativ
2,0 g Butanonoxim
19,2 g Kristallöl 30

Der bei Raumtemperatur flüssige, klare Lack wurde mit Hilfe einer Rakel auf Glasplatten aufgetragen und lieferte nach dem Trocknen an der Luft einen hochglänzenden Film mit einer Stärke von etwa 30 µm. Die Pendelhärte betrug

nach 1 d : 35 s,
nach 7 d : 53 s,
nach 14 d : 80 s.

**Patentansprüche**

**1.** Verwendung von Poly-N-acylalkyleniminen der Formel

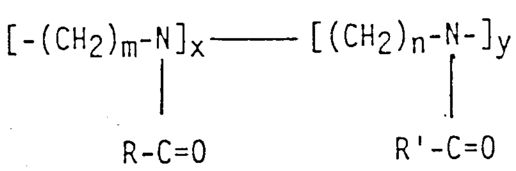

(I)

in der R-CO den Acylrest einer einfach oder mehrfach ungesättigten aliphatischen Carbonsäure mit 16 bis 22 C-Atomen oder eine Mischung solcher Reste, R'-CO den Acylrest einer Carbonsäure mit 1 bis 22 C-Atomen oder eine Mischung solcher Reste, m und n jeweils unabhängig die Werte 2 oder 3 und x und y die Gewichtsanteile der jeweiligen Polymerbausteine bedeuten, wobei x Werte von 20 bis 100 % und y Werte von 80 bis 0 % annehmen kann, als oxidativ vernetzenden Bestandteil in Anstrichmitteln.

**2.** Verwendung gemäß Anspruch 1, bei der in Formel (I) x Werte von 20 bis 95 % und y Werte von 80 bis 5 % annehmen kann.

**3.** Verwendung gemäß Anspruch 2, bei der in Formel (I) x Werte von 50 bis 95 % und y Werte von 50 bis 5 % annehmen kann.

**4.** Verwendung nach einem der Ansprüche 1 bis 3, bei der in Formel I m und n den Wert 2 aufweisen.

**5.** Verwendung nach einem der Ansprüche 1 bis 3, bei der in Formel (I) der Acylrest R-CO von einer der folgenden Carbonsäuren oder einem Gemisch dieser Carbonsäuren abgeleitet ist:

Palmitoleinsäure
Petroselinsäure
Ölsäure
Elaidinsäure
Ricinolsäure
Linolsäure
Linolensäure
Gadoleinsäure

Arachidonsäure
Erucasäure
Brassidinsäure
Clupanodonsäure
Konjuenfettsäure
Additionsprodukte aus monoepoxidierter Linolsäure und Wasser oder einem Alkohol mit 1 bis 3 C-Atomen.

6. Verwendung nach einem der Ansprüche 1 bis 3, bei der das Poly-N-acylalkylenimin ein mittleres Molekulargewicht von 1000 bis 1 000 000, vorzugsweise 3000 bis 50 000 aufweist.

7. Poly-N-acylalkylenimin der Formel (I) gemäß Anspruch 1, in der der Acylrest R-CO von einer der folgenden Carbonsäuren oder einem Gemisch dieser Carbonsäuren abgeleitet ist:
Palmitoleinsäure
Petroselinsäure
Ölsäure
Elaidinsäure
Ricinolsäure
Linolsäure
Linolensäure
Gadoleinsäure
Arachidonsäure
Erucasäure
Brassidinsäure
Clupanodonsäure
Konjuenfettsäure
Additionsprodukte aus monoepoxidierter Linolsäure und Wasser oder einem Alkohol mit 1 bis 3 C-Atomen.
und in der R'-CO, m, n, x und y die in Anspruch 1 genannte Bedeutung besitzen.

8. Poly-N-acylalkylenimin gemäß Anspruch 7, wobei in Formel (I) x Werte von 20 bis 95 % und y Werte von 80 bis 5 % annehmen kann.

9. Poly-N-acylalkylenimin gemäß Anspruch 8, wobei x Werte von 50 bis 95 % und y Werte von 50 bis 5 % annehmen kann.

10. Poly-N-acylalhylenimin gemäß einen der Ansprüche 7 bis 9, bei dem in Formel (I) m und n den Wert 2 aufweisen.

11. Poly-N-acylalkylenimin gemäß einem der Ansprüche 7 bis 9, wobei in Formel (I) R'-CO den Acylrest einer gesättigten aliphatischen Carbonsäure oder einer Ethercarbonsäure mit 2 - 22 C-Atomen, vorzugsweise 8 - 22 C-Atomen, oder von Benzoesäure oder eine Mischung solcher Reste bedeutet.

12. Poly-N-acylalkylenimin gemäß einem der Ansprüche 7 bis 9 mit einem mittleren Molekulargewicht von 1000 bis 1 000 000, vorzugsweise 3000 bis 50 000.

13. Anstrichmittel, enthaltend ein Poly-N-acylalkylenimin gemäß einem der Ansprüche 7 bis 12 in Mengen zwischen 5 und 80 Gew.-%, vorzugsweise zwischen 10 und 60 Gew.-%.

## Claims

1. The use of poly-N-acylalkyleneimines corresponding to the following formula

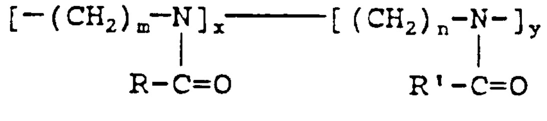

(I)

in which R-CO is the acyl radical of a mono- or polyunsaturated, aliphatic $C_{16-22}$ carboxylic acid or a mixture of such radicals, R'-CO is the acyl radical of a $C_{1-22}$ carboxylic acid or a mixture of such radicals, m and n independently of one another assume the values 2 or 3 and x and y represent the percentages by weight of the particular polymer units, x assuming values of 20 to 100% and y values of 80 to 0%,
as an oxidatively crosslinking constituent of paints.

**2.** The use claimed in claim 1, in which x in formula (I) may assume values of 20 to 95% and y values of 80 to 5%.

**3.** The use claimed in claim 2, in which x in formula (I) may assume values of 50 to 95% and y values of 50 to 5%.

**4.** The use claimed in any of claims 1 to 3, in which m and n in formula I assume the value 2.

**5.** The use claimed in any of claims 1 to 3, in which the acyl radical R-CO in formula (I) is derived from one of the following carboxylic acids or from a mixture of these carboxylic acids: palmitoleic acid, petroselic acid, oleic acid, elaidic acid, ricinoleic acid, linoleic acid, linolenic acid, gadoleic acid, arachidonic acid, erucic acid, brassidic acid, clupanodonic acid, conjuene fatty acid, adducts of monoepoxidized linoleic acid and water or a $C_{1-3}$ alcohol.

**6.** The use claimed in any of claims 1 to 3, in which the poly-N-acylalkyleneimine has an average molecular weight of 1,000 to 1,000,000 and preferably 3,000 to 50,000.

**7.** Poly-N-acylalkyleneimine corresponding to formula (I) in claim 1, in which the acyl radical R-CO is derived from one of the following carboxylic acids or from a mixture of these carboxylic acids: palmitoleic acid, petroselic acid, oleic acid, elaidic acid, ricinoleic acid, linoleic acid, linolenic acid, gadoleic acid, arachidonic acid, erucic acid, brassidic acid, clupanodonic acid, conjuene fatty acid, adducts of monoepoxidized linoleic acid and water or a $C_{1-3}$ alcohol, and in which R'-CO, m, n, x and y are as defined in claim 1.

**8.** Poly-N-acylalkyleneimine as claimed in claim 7, in which x in formula (I) may assume values of 20 to 95% and y values of 80 to 5%.

**9.** Poly-N-acylalkyleneimine as claimed in claim 8, in which x may assume values of 50 to 95% and y values of 50 to 5%.

**10.** Poly-N-acylalkyleneimine as claimed in any of claims 7 to 9, in which m and n in formula (I) assume the value 2.

**11.** Poly-N-acylalkyleneimine as claimed in any of claims 7 to 9, in which R'-CO in formula (I) is the acyl radical of a saturated aliphatic carboxylic acid or of an ether carboxylic acid containing 2 to 22 and preferably 8 to 22 carbon atoms or of benzoic acid or a mixture of such radicals.

**12.** Poly-N-acylalkyleneimine as claimed in any of claims 7 to 9 having an average molecular weight of 1,000 to 1,000,000 and Preferably 3,000 to 50,000.

**13.** Paints containing the poly-N-acylalkyleneimine claimed in any of claims 7 to 12 in quantities of 5 to 80% by weight and preferably in quantities of 10 to 60% by weight.

**Revendications**

1. Utilisation de poly-N-acylalkylèneimines de formule (I) :

$$\begin{array}{ccc} [-(CH_2)_m-N]_x & \text{——-} & [(CH_2)_n-N-]_y \\ | & & | \\ R-C=O & & R'-C=O \end{array}$$

dans laquelle R-CO représente le reste acyle d'un acide carboxylique aliphatique mono ou polyinsaturé ayant de 16 à 22 atomes de C ou un mélange de tels restes, R'-CO le reste acyle d'un acide carboxylique ayant 1 à 22 atomes de C, ou un mélange de tels restes, m et n prenant les valeurs 2 ou 3 indépendamment l'un de l'autre et x et y la proportion pondérale des éléments polymères correspondants, x ayant des valeurs comprises entre 20 et 100 % et y des valeurs comprises entre 80 et 0 %, comme composant réticulant par oxydation dans les peintures.

2. Utilisation selon la revendication 1, dans laquelle x dans la formule (I) peut prendre des valeurs de 20 à 95 % et y des valeurs de 80 à 5 %.

3. Utilisation selon la revendication 2, dans laquelle x dans la formule (I) peut prendre des valeurs de 50 à 95 % et y des valeurs de 50 à 5 %.

4. Utilisation selon l'une des revendications 1 à 3, dans laquelle dans la formule (I) m et n représentent la valeur 2.

5. Utilisation selon l'une des revendications 1 à 3, dans laquelle dans la formule (I) le reste acyle R-CO dérive d'un des acides carboxyliques suivants ou d'un mélange de ces acides carboxyliques :
acide palmitoléïque
acide pétrosélique
acide oléïque
acide élaïdique
acide ricinoléique
acide linoléique
acide linolénique
acide gadoléïque
acide arachidonique
acide érucique
acide brassidique
acide clupanodonique
acide gras conjugué
produits d'addition d'acide linoléique monoépoxydé et d'eau ou d'un alcool avec de 1 à 3 atomes de C.

6. Utilisation selon l'une des revendications 1 à 3, dans laquelle la poly-N-acylalkylèneimine présente un poids moléculaire de 1000 à 1000000, de préférence de 3000 à 50000.

7. Poly-N-acylalkymèneimine de formule (I) selon la revendication 1 dans laquelle le reste acyle R-CO dérive de l'un des acides carboxyliques suivants ou d'un mélange de ces acides carboxyliques :
acide palmitoléïque
acide pétrosélique
acide oléïque
acide élaïdique
acide ricinoléique
acide linoléique
acide linolénique
acide gadoléïque
acide arachidonique

acide érucique
acide brassidique
acide clupanodonique
acide gras conjugué
procuits d'addition d'acide linoléique monoépoxydé et d'eau ou d'un alcool avec de 1 à 3 atomes de C, et dans laquelle R'-CO, m, n, x et y ont la signification donnée à la revendication 1.

**8.** Poly-N-acylalkylèneimine selon la revendication 7, dans laquelle dans la formule (I) x peut prendre des valeurs de 20 à 95 % et y des valeurs de 80 à 5 %.

**9.** Poly-N-acylalkyèneimine selon la revendication 8, dans laquelle x peut prendre des valeurs de 50 à 95 % et y des valeurs de 50 à 5 %.

**10.** Poly-N-acylalkylèneimine selon l'une des revendications 7 à 9, dans laquelle dans la formule (I) m et n présentent la valeur 2.

**11.** Poly-N-acylalkylèneimine selon l'une des revendications 7 à 9, dans laquelle dans la formule (I) R'-CO représente le reste acyle d'un acide carboxylique aliphatique saturé ou d'un acide éthercarboxylique avec 2-22 atomes de C, de préférence 8-22 atomes de C, ou de l'acide benzoïque ou un mélange de tels restes.

**12.** Poly-N-acylalkylèneimine selon l'une des revendications 7 à 9 avec un poids moléculaire moyen de 1000 à 1000000, de préférence de 3000 à 50000.

**13.** Peinture, contenant une poly-N-acylalkylèneimine selon l'une des revendications 7 à 12 en quantités comprises entre 5 et 80 % en poids, de préférence entre 10 et 60 % en poids.